# FASCICULE DE BREVET EUROPEEN

(11) **EP 3 224 013 B1**
(45) Date de publication et mention de la délivrance du brevet: **03.10.2018**
(21) Numéro de dépôt: 15817943.2
(22) Date de dépôt: 23.11.2015
(51) Int. Cl.: B29C 45/00, B29C 45/14

(54) **PROCEDE DE SURMOULAGE SUR UN INSERT PLASTIQUE ET PIECE AUTOMOBILE OBTENUE PAR CE PROCEDE**
VERFAHREN ZUM HERSTELLEN EINES UMSPRITZEN TEILS UND DURCH DIESES VERFAHREN HERGESTELLTES FAHRZEUGTEIL
METHOD FOR PRODUCING AN OVERMOULDED PART AND VEHICLE PART OBTAINED BY SAID METHOD

(30) Priorité: 25.11.2014 FR 1461409
(43) Date de publication de la demande: 04.10.2017
(73) Titulaire: Compagnie Plastic Omnium, 69007 Lyon (FR)
(72) Inventeur: GINJA, Stéphane, 01500 Amberieu en Bugey (FR); CHENE, Anthony, 01640 Jujurieux (FR); VIOT, Frédéric, 01450 Poncin (FR); BERNARD, Marine, 01640 Jujurieux (FR); DUBOST, Elise, 69100 Villeurbanne (FR)
(74) Mandataire: McDade, Sophie V.G.A.
(86) Numéro de dépôt international: PCT/FR2015/053167
(87) Numéro de publication internationale: WO 2016/083712

(56) Documents cités:
- EP-A1- 2 636 523
- EP-A1- 2 724 860
- WO-A1-2011/138384
- WO-A1-2014/013871
- JP-A- 2001 162 648
- JP-B2- 3 377 010
- US-A1- 2012 027 983
- US-B2- 8 071 220
- GIBEOP NAM ET AL: "Study of Maleic Anhydride Grafted Polypropylene Effect on Resin Impregnated Bamboo Fiber Polypropylene Composit", AGRICULTURAL SCIENCES, vol. 05, no. 13, 1 janvier 2014 (2014-01-01), pages 1322-1328, XP055191858, ISSN: 2156-8553, DOI: 10.4236/as.2014.513141
- V Goodship ET AL: "Rapra Review Reports Vol 13, Number 1, Report 145 Multi-Material Injection Moulding" In: "Rapra Review Reports Vol 13, Number 1, Report 145 Multi-Material Injection Moulding", 1 janvier 2002 (2002-01-01), RAPRA Technology Ltd, XP055191907, pages 66-66, "Item 177"
- Anonymous: "DuPont(TM) Fusabond functionalized polymers/resin modifiers: list, descriptions and data sheets", , 3 octobre 2014 (2014-10-03), XP055192144, Extrait de l'Internet: URL:https://web.archive.org/web/2014100316 4325/http://www2.dupont.com/Fusabond/en_US / [extrait le 2015-05-28]
- "Technical Bulletin 1301 New Markets for Talc-Filled Polymers Introduction", , 18 avril 2013 (2013-04-18), XP055250714, Extrait de l'Internet: URL:http://web.archive.org/web/20130418092 230/http://www.mondominerals.com/uploads/m edia/mondo_bulletin_plastics.pdf [extrait le 2016-02-17]

## Description

La présente invention concerne la fabrication de pièces automobiles en matériau à base d'un ou plusieurs composés (thermo)plastiques. Elle concerne particulièrement un procédé permettant la fabrication de pièces automobiles et plus particulièrement de pièces de carrosseries.

Un véhicule automobile peut comprendre de nombreuses pièces en plastiques habituellement réalisées par un procédé de moulage par injection et qui comportent un ou plusieurs inserts. Ces inserts sont des pièces préformées incorporées à, et/ou solidaires de, ladite pièce moulée qui servent en général à renforcer ladite pièce moulée et/ou à la fixation ultérieure d'éléments mécaniques. Ces inserts peuvent être réalisés en acier, aluminium ou en matières plastiques composites. Les pièces obtenues peuvent être des pièces structurelles ou semi-structurelles du véhicule automobile en question. Ainsi le surmoulage des pièces n'est pas obtenu par injection simultanée de l'insert et de la couche qui l'incorpore. Cependant le surmoulage peut être effectué par des injections successives. Le surmoulage peut également s'obtenir en utilisant des moules distincts, chacun ayant une empreinte, ou un seul moule à partie mobile rotative (moule à empreintes rotatives) qui comprend au moins 2 empreintes distinctes et qui permet de réaliser lors d'une même injection à la fois une pièce surmoulée et un insert.

Il est bien sur très important pour la qualité des pièces produites d'assurer une bonne fixation entre l'insert et la matière plastique qui l'incorpore ou lui est attachée, matière que l'on appelle usuellement « matière de surmoulage » du fait de la technique de fabrication le plus souvent utilisée. La fixation peut être une connexion mécanique. Par exemple si l'insert est percé, la matière surmoulée flue dans le perçage et crée une liaison de type un rivet.

Cette fixation peut-être une adhésion des surfaces mises en contact. Par exemple des liants chimiques tels que des résines ou des colles peuvent être appliquées notamment sur les surfaces de contact de l'insert. Par exemple le brevet au nom de DUPONT publié sous le numéro EP1313780B1 décrit un matériau en polypropylène sur lequel sont greffées des molécules d'anhydride maléique (AM). Ce matériau ne peut pas être utilisé en tant que matière de surmoulage en tant que tel du fait de ses caractéristiques rhéologiques ne lui permet pas d'être injecté directement sur presse à injection. De plus, ses caractéristiques mécaniques sont trop faibles pour la réalisation d'une pièce structurelle ou semi-structurelle.

Ces modes de fixation mécanique ou chimique sont souvent des points faibles de la pièce composite, en particulier lors de la sollicitation créée par des chocs dans le cas de pièces automobiles.

L'adhésion peut également être réalisée par un processus de réaction chimique entre les matériaux de l'insert et du surmoulage. Dans ce cas, une adhésion satisfaisante ne peut être obtenue qu'entre un insert et une matière de surmoulage compatible, c'est-à-dire de même nature chimique (PP/PP, PA/PA) et/ou en fondant les matériaux. Ainsi la fabrication de pièces composites comprenant un ou plusieurs inserts implique soit des étapes supplémentaires (par exemple chauffage, collage, perçage, traitement de surface) soit une limitation dans les choix et combinaisons possibles (compatibles) sur la nature des matériaux constituant l'insert et le matériau de surmoulage. Document JP 3 377 010 B2 divulgue un procédé de fabrication d'une pièce automobile composite par surmoulage, sur au moins une surface d'un insert comprenant un premier matériau plastique, d'une couche d'un second matériau thermoplastique, ledit procédé comprenant les étapes successives suivantes :
a) une étape de positionnement dudit insert dans un moule, et
b) une étape de moulage dudit second matériau thermoplastique sur ledit insert; au moins un desdits premier et second matériaux comprenant un additif, ledit additif comprenant un polymère sur lequel sont greffés des monomères d'anhydrides carboxyliques ; lesdits premier et second matériaux étant respectivement à base de polyamide et à base de polypropylène, ou inversement. Dans un autre exemple divulgué dans ce document, du talc est utilisé comme charge minérale.

### Description

L'invention a pour but de remédier à un ou plusieurs de ces désavantages en fournissant notamment un procédé de fabrication d'une pièce composite par surmoulage sur un insert plastique. Selon un mode de réalisation de l'invention ledit procédé porte sur la fabrication d'une pièce automobile composite par surmoulage, sur au moins une surface d'un insert comprenant un premier matériau plastique, d'une couche d'un deuxième matériau thermoplastique, ledit procédé comprenant les étapes successives suivantes :
a) une étape de positionnement dudit insert dans un moule, et
b) une étape de moulage préférablement par injection dudit second matériau thermoplastique sur ledit insert;
au moins un desdits premier et second matériaux comprenant un additif, ledit additif comprenant un polymère sur lequel sont greffés des monomères d'anhydrides carboxyliques.

Il est ainsi possible de réaliser des pièces composites entre des matériaux de nature différentes, non compatibles chimiquement et avec un insert dont la matière n'est pas refondue (déformable). Ce procédé permet de combiner l'étape d'adhésion entre l'insert et le matériau de surmoulage à l'étape de formation de ladite pièce composite par moulage. Ainsi la pièce composite peut être réalisée en une opération de surmoulage par injection ou par compression. Le procédé selon l'invention permet en outre de pouvoir mieux adapter le matériau de surmoulage (où «second matériau ») aux exigences souhaitées pour la pièce automobile telles que son module d'Young (en faisant varier par exemple le type ou le taux de a charge) et/ou la résistance au choc (en faisant varier par exemple le taux d'élastomère) et/ou son comportement en rhéologie (en choisissant par exemple la nature ou le grade de la matrice de plastique). Ainsi selon un aspect préféré de l'invention le premier matériau et le second matériau sont des matériaux de nature différente, de préférence non susceptible d'adhérer l'un à l'autre de manière satisfaisante lorsque soumis à des conditions de pression et de température typiques du moulage par injection. Une adhésion satisfaisante peut être définie par la norme standard internationale ASTM D5868.

Avantageusement lesdits premier et second matériaux sont respectivement à base de polyamide et à base de polypropylène, ou inversement.

Le matériau de surmoulage est une matière plastique. De préférence ce matériau est choisi de manière à pouvoir faire l'objet d'un moulage par injection. Ainsi il peut avantageusement être à base d'une polyoléfine choisie dans le groupe constituée par le polypropylène (PP), le polyéthylène (PE), haute ou basse densité, et/ou les copolymères de propylène et d'éthylène. Ces matériaux peuvent être vierges ou recyclés.

L'expression « à base de » désigne un matériau comprenant au moins 50% en poids du composé identifié à la suite de cette expression.

De préférence la matière plastique comprend au moins 60% de polypropylène, plus particulièrement au moins 70% et préférentiellement au moins 80% en poids de l'oléfine par rapport au poids total du matériau de surmoulage.

L'additif qui est compris dans le premier et/ou le second matériau comprend de plus au moins un, et de préférence plusieurs, (par exemple deux), additifs. Cet additif est choisi dans le groupe constitué des polymères sur lesquels sont greffés des monomères d'anhydrides carboxyliques et plus particulièrement d'anhydride maléique et de ses dérivés. Le polymère peut être un polymère de nature ou de structure similaire ou identique au polymère formant la base du matériau auquel il est adjoint. Avantageusement ces polymères sont choisis dans le groupe constitué par le polypropylène, le polyéthylène (PE), haute ou basse densité, les copolymères de propylène et d'éthylène, et/ou un élastomère thermoplastique à base de copolymères blocs styréniques (TPS) tel que le Styrène Ethylène Butadiène Styrène (SEBS) (polystyrène-b-poly(éthylène-butylène)-b-polystyrène). Le pourcentage en poids de monomère d'acide maléique par rapport au poids total de l'additif peut aller de 0,5% à 10%.

De préférence le ou les additifs sont présents dans des proportions allant de 0,1 à 25%, avantageusement de 2 à 25%, plus particulièrement de 0,1 à 20%, par exemple 2 à 20%, en masse par rapport au poids total dudit matériau. Avantageusement cette proportion est d'environ 10% ± 2% en masse.

Lorsque l'additif comprend du SEBS, celui-ci peut être avantageusement présent dans des proportions allant de 0,1 à 10% en masse par rapport à la masse totale du matériau.

Lorsque l'additif comprend du PP greffé, celui-ci peut être avantageusement présent dans des proportions allant de 2 à 25% en masse par rapport à la masse totale du matériau.

Selon un mode de réalisation particulièrement préféré de l'invention l'additif comprend, ou est constitué d'un mélange de SEBS et de PP greffé par des monomères d'acide maléiques. Les proportions relatives de ces constituants par rapport à la masse totale du matériau peuvent être respectivement d'environs 0,1 et 15% en masse.
Selon un mode de réalisation préféré, le second matériau (ou matériau de surmoulage) comprend l'additif.

De préférence le matériau de surmoulage comprend une charge minérale ou organique par exemple du quartz, du mica, du kaolin, du phosphate de calcium, du feldspath, de la stéatite, de la craie, du talc, du noir de carbone de la silice synthétique, du sulfate de baryum, de la ferrite de baryum, de la farine de bois ou d'écorce de fruit, de la pâte de cellulose, des fibres de verre, des fibres de carbone ,des microsphères de verre creuses très utilisées, silice synthétique, de l'argile nanométrique, du lin, etc. ainsi que leurs mélanges.

Cette charge peut varier de 1 à 49,9% en poids suivant la nature de la charge, par exemple de 3 à 30%, plus particulièrement de 1 à 40% en poids par rapport au poids du matériau de surmoulage. De préférence cette charge, en poids, est comprise de 5 à 40 %, de préférence de 5 à 30%, par exemple de 10% et de préférence 12% par rapport au poids total du matériau de surmoulage.

De préférence la charge comprend une charge minérale et en particulier du talc.

Il est également avantageux que le matériau de surmoulage comprenne un matériau élastomère, par exemple un copolymère de type EPR (*Ethylene Propylene Rubber* ou caoutchouc éthylène propylène) qui peut être présent dans une proportion allant de 5 à 35% en masse de la masse totale du matériau de surmoulage. La quantité de caoutchouc éthylène propylène est avantageusement de 5 à 15%, de préférence 10%, en poids par rapport au poids total du plastique.
Le matériau de surmoulage peut également comprendre un colorant, tel que du noir de carbone par exemple dans des proportions de 0,5% en masse.

Le second matériau (ou matériau de surmoulage) peut donc comprendre, ou consister en, un copolymère propylène/éthylène et/ou un élastomère, et/ou une charge minérale, comme par exemple du talc. Avantageusement ledit matériau de surmoulage comprend, ou consiste en, un mélange de polypropylène, de polyéthylène, de talc et de caoutchouc éthylène propylène et d'additif. La quantité de polypropylène du matériau de surmoulage est avantageusement d'au moins 50% en poids par rapport au poids total dudit matériau. La quantité de caoutchouc éthylène propylène est avantageusement de 5 à 15%, de préférence 10%, en poids par rapport au poids total du plastique.

Selon l'invention, la couche de surmoulage de ladite pièce composite est faite d'un polymère comprenant, ou étant constitué de, un copolymère P/E à base de propylène polyéthylène comprenant 12% en masse de talc et 10% en masse d'un matériau élastomère de type EPR, de 0,2% à 0,5% en masse de SEBS et de 5% à 10% en masse de polypropylène greffé par des monomères d'anhydride maléique.

De préférence l'insert et/ou le matériau de surmoulage ne comprend substantiellement pas d'ions métalliques. Par exemple, il comprend moins de 3% de fonctions acides carboxyliques neutralisé par un ou plusieurs ions métalliques.

De préférence le matériau de surmoulage peut être fabriqué par un procédé standard d'extrusion où le polymère de base est ramolli ou liquéfié puis est mélangé avec les autres composants dans des proportions prédéterminées avant d'être extrudé et éventuellement soumis à une étape de granulation pour obtenir des granulés solides. De manière avantageuse ces granulés peuvent être utilisés directement lors de la fabrication de la pièce composite. Alternativement il est également possible que le matériau de surmoulage soit obtenu lors du moulage de la pièce composite par adjonction et mélange de ses différents composants dans les proportions requises dans la vis de la presse à injection du dispositif de moulage.

L'insert est une pièce de préférence comprenant un matériau plastique, avantageusement à base de polyamides tels que les polycaprolactames : [NH-(CH2)5-CO]n (PA-6), et les polyhexaméthylène adipamides : [NH-(CH2)6-NH-CO-(CH2)4-CO]n (PA-6,6,). Le matériau plastique (ou premier matériau) formant en tout ou partie l'insert peut également être à base de polypropylène et/ou de polyéthylène. Cette pièce peut comprendre une charge organique ou minérale telle que décrite précédemment.

Lorsque l'insert a une fonction structurelle, semi structurelle ou une fonction de renfort, la charge peut comprendre, ou être constituée d', un matériau permettant d'assurer une telle fonction comme des fibres de verre ou des fibres de carbone. Les proportions de cette charge peuvent varier de 10 à 95%, de préférence de 15 à 90%, avantageusement de 20 à 85%, et plus particulièrement de 75 à 85%, en masse de la masse totale du matériau de l'insert ainsi renforcé.

Comme mentionné précédemment, la forme et la fonction de l'insert peuvent être multiples. Il peut selon un mode de réalisation particulier être la partie rigide d'une poutre destinée à être placée derrière un pare choc de véhicule automobile. Une telle poutre permet de soutenir le pare choc et de supporter la déformation lors d'un choc. La poutre comprend donc généralement une partie rigide (insert) et une partie plus souple (matériau moulable). La partie rigide apporte du maintien et limite la déformation lors de chocs à grande vitesse. La partie plus souple est plus particulièrement destinée à absorber les chocs à petite vitesse. Classiquement la partie rigide sera positionnée en avant, c'est-à-dire en contact avec le pare choc, et la partie souple est positionnée entre la partie rigide et la caisse en acier de la voiture.

Lors de l'étape de positionnement de l'insert selon le procédé de l'invention, celui-ci n'est pas à l'état fondu et/ou est à température ambiante et/ou n'est pas soumis à un préchauffage.

De manière avantageuse, l'insert n'est pas chauffé ou est chauffé à une température inférieure au point de fusion dudit premier matériau Par exemple la température de l'insert en PA chargé de fibres de verre lors de son positionnement dans le moule est la température ambiante ou peut atteindre 180°C, par exemple aller de 50 à 180°C. Le chauffage peut être effectué par l'application de lampes à infrarouge.

Pour améliorer encore l'adhésion entre la surface externe de l'insert et le matériau de surmoulage, il est possible d'effectuer une ou plusieurs étapes préliminaires de traitement de cette surface par des moyens chimiques ou mécaniques.

Un exemple de traitement de surface chimique permettant de renforcer l'adhésion est le flammage où la surface traitée est soumise à l'application d'une flamme. Cette étape de flammage est connue dans le domaine technique de l'invention et peut être effectuée à l'aide d'un brûleur au gaz naturel dans des conditions légèrement oxydantes ou non.

Un exemple de traitement physique de la surface de l'insert qui peut permettre de renforcer l'adhésion est l'application d'une étape de ponçage ou de sablage.

L'invention porte également sur une pièce composite, en particulier une pièce d'un véhicule automobile, comprenant un insert, ledit insert comprenant, ou étant constitué d'un premier matériau plastique, et une couche d'un second matériau thermoplastique, caractérisé en ce qu'au moins l'un desdits premier et second matériaux comprend un additif, ledit additif comprenant un polymère sur lequel sont greffés des monomères d'anhydrides carboxyliques. Les matériaux formant ladite pièce composite et leurs proportions respectives peuvent être tels que décrits dans la présente demande. Selon un mode de réalisation préféré ladite pièce composite comprend une surface d'adhésion entre l'insert et le second matériau, cette surface ne comprenant substantiellement pas d'autres matériaux que les matériaux constitutifs du premier et second matériau. La pièce composite selon l'invention peut adopter toutes les formes, notamment les formes de pièces utilisées dans la fabrication de véhicules automobiles. De préférence la pièce est une pièce structurelle ou semi- structurelle, comme une poutre (par exemple une poutre de pare choc).

L'invention porte également sur une pièce composite, en particulier une pièce d'un véhicule automobile, obtenu directement par le procédé de l'invention, ainsi que sur un véhicule automobile comprenant ladite pièce.

Un autre objet de l'invention est une composition plastique, de préférence thermoplastique, comprenant un polymère et un additif greffé et telle que décrite dans la présente demande. Cette composition est de préférence injectable et destinée à être utilisée dans un procédé de moulage par injection, en particulier pour la fabrication de pièces de véhicules automobiles.

Encore un autre objet de l'invention est l'utilisation de ladite composition plastique dans la fabrication de pièces composites, en particulier de pièces composites de véhicules automobiles.

L'invention sera mieux comprise à la lecture de la figure annexée, qui est fournie à titre indicatif et ne présentent aucun caractère limitatif, dans laquelle:

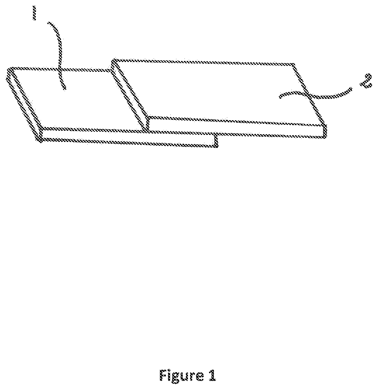

La figure 1 est un schéma représentant la position respective des éprouvettes utilisées pour tester de l'adhérence des matériaux d'une pièce composite selon l'invention.

### EXEMPLES DE REALISATION

### Un matériau de surmoulage selon l'invention est réalisé comme suit :

Dans une extrudeuse à double vis standard, on verse dans la trémie d'entrée des granulées d'un copolymère propylène/éthylène, de proportion respective P/E 80/20. L'extrudeuse permet l'ajout de composés à environs le tiers du parcours d'extrusion quand le polymère de départ a fondu. Sont ajoutés ainsi :
- 12% en masse de talc ;
- 10% en masse d'EPR (PP 108MF10 vendu la société Saudi Basic Industries Corporation (SABIC), Le Monge - 22 place des Vosges, La Défense 5, 92979 Paris La Défense cedex, France) ;
- 0,2% en masse de SEBS greffé par de l'anhydride maléique (type KRATON FG 1901G) ; et
- 10% en masse de PP greffé AM de type Orevac CA 100.

Les polymères de type Kraton FG sont des polymères greffés par ajout d'anhydride maléique. Le taux de greffage de ces polymères est d'environs de 1.0 à 1.7 % en masse. Ces polymères sont vendus par la société Kraton Performance Polymer Inc, 15710 John F Kennedy Blvd, Houston, TX 77032, États-Unis.

Le polymère OREVAC® CA100 est un polymère hautement fonctionnaliser avec une forte proportion d'anhydride maléique vendue par la société ARKEMA, Immeuble Défense Ouest 420, rue d'Estienne d'Orves 92705 COLOMBES Cedex, France.

Les granulés obtenus après granulation à la sortie de l'extrudeuse (T° env. 220°c) contiennent donc les % donnés plus haut.

### Réalisation d'une pièce composite selon l'invention :

Une poutre composite destinée à être positionnée derrière le pare choc d'un véhicule automobile est réalisée.

Une pièce, ou poutre, en polyamide PA-6 PA est réalisé par pultrusion. Celle-ci contient 80% en masse de fibres de verre. Cet insert est chauffé à 150°C en surface et est placé dans un moule à injection de type standard utilisé pour la fabrication de pièces automobiles.

La matière de surmoulage décrite précédemment est versée dans la trémie pour venir alimenter la vis de plastification (type vis sans fin). Celle-ci est chauffée et thermorégulée via le fourreau de plastification à 250°C pour permettre le passage à l'état fondu (déformable).

La matière est acheminée à l'avant de la vis de plastification pour être dosée et injectée sous forte pression à l'intérieur du moule qui présente la forme de la pièce souhaitée. Cette matière est injectée directement sur les surfaces de l'insert exposées par le moule. Le moule est régulé à une température inférieure à la température de transformation, c'est-à-dire aux environs de 40 à 50°C. La pression est maintenue pendant 10 à 20 secondes (dans ce cas 10 secondes) afin de pallier le retrait de la matière durant son refroidissement. La pièce est refroidie durant quelques secondes puis est éjectée.

La poutre composite est ainsi obtenue directement à la sortie du moule à injection et comprend une partie plus rigide (l'insert) et une partie plus souple qui est fixée directement sur l'insert par surmoulage. L'adhérence de ces deux composants entre eux satisfait aux critères requis. Par exemple l'adhérence est jugée satisfaisante lorsqu'il il n'y a pas de décohésion entre la poutre surmoulée et la matière de surmoulage après des essais de choc.

Un protocole pouvant être appliquée pour s'assurer de la cohésion de la pièce composite est l'application sur des éprouvettes (languettes) d'un test standard international de contrainte de cisaillement de recouvrement résiduel (« lap shear test ») comme celui du standard ASTM D5868. Les éprouvettes sont réalisées dans les mêmes matériaux que ceux des pièces composites. La forme des pièces utilisées sont représentées à la figure 1.

Ainsi des barreaux rectangulaires (1) de PA de dimensions 125x25 mm et d'épaisseur 2mm comprenant une proportion de fibres de verre à 83% en masse sont introduits dans un moule. On injecte une composition plastique selon l'invention comprenant un polymère greffé avec de l'anhydride maléique. La presse utilisée est de 200T et la température de moulage de 80°C. La pièce surmoulée est un barreau rectangulaire (2) de même dimension 125x25mm que le barreau (1) mais d'épaisseur de 3mm. Le surmoulage n'a lieu que par recouvrement d'une des surfaces des barreaux et est telle que représentée sur le schéma de la figure 1. La surface de recouvrement est de 25X25 mm. Ces éprouvettes sont ensuite caractérisées en traction (via une machine de traction) à une vitesse de 13mm/mn. La valeur de contrainte doit être supérieure à 1 MPa. Le test doit être répété avec succès au moins 5 fois.

L'invention n'est pas limitée aux modes de réalisation présentés et d'autres modes de réalisation apparaîtront clairement à l'homme du métier. Il est notamment possible d'utiliser d'autres matières plastiques pour réaliser soit l'insert, soit le matériau injectable éventuellement avec les matériaux précédemment décrit. Ce matériau peut être choisi parmi les matériaux thermodurcissables à base de, ou comprenant du, polyester, de l'époxy ou du vinylester (VE). Ce matériau peut également être choisi parmi les polyoléfines, par exemple dans le groupe constitué de l'acrylonitrile butadiène styrène (ABS), les polyamides tels que les polycaprolactames : [NH-(CH2)5-CO]n (PA-6), et les polyhexaméthylène adipamides : [NH-(CH2)6-NH-CO-(CH2)4-CO]n (PA-6,6,), les polycarbonates (PC), les polyéthylènes haute densité (PE-HD), les polyéthylènes basse densité (PE-LD), les poly(téréphtalate d'éthylène) (PET) amorphe ou cristallin, les poly(méthacrylate de méthyle) (PMMA), les polypropylènes (PP), les polystyrènes (PS) « cristal », polychlorure de vinyle (PVC) rigide et leurs mélanges. Il est également envisagé d'utiliser non l'injection comme moyen de moulage mais la compression. Cette alternative utilise un matériau pré-imprégné tel qu'un tissu préimprégné de résine (encore appelée matrice) qui est appliqué sur l'insert et moulé.

## Revendications

1. Procédé de fabrication d'une pièce automobile composite par surmoulage, sur au moins une surface d'un insert comprenant un premier matériau plastique, d'une couche d'un second matériau thermoplastique, ledit procédé comprenant les étapes successives suivantes :
a) une étape de positionnement dudit insert dans un moule, et
b) une étape de moulage dudit second matériau thermoplastique sur ledit insert;
au moins un desdits premier et second matériaux comprenant un additif, ledit additif comprenant un polymère sur lequel sont greffés des monomères d'anhydrides carboxyliques ;
lesdits premier et second matériaux étant respectivement à base de polyamide et à base de polypropylène, ou inversement ; et
ledit second matériau comprenant du talc comme charge minérale ; ledit procédé étant **caractérisé en ce que** ledit second matériau est fait d'un polymère comprenant un copolymère P/E à base de propylène polyéthylène comprenant 12% en masse de talc et 10% en masse d'un matériau élastomère de type EPR, de 0,2% à 0,5% en masse de SEBS et de 5% à 10% en masse de polypropylène greffé par des monomères d'anhydride maléique.

2. Procédé selon la revendication 1, **caractérisé en ce que** ladite étape de moulage est une étape de moulage par injection.

3. Procédé selon la revendication 1 ou 2, **caractérisé en ce que** ledit premier matériau comprend un additif et que ledit additif est de l'anhydride maléique et/ou un de ses dérivés, éventuellement dans des proportions allant de 0,1 à 20%, avantageusement de 2 à 20%, en masse par rapport à la masse totale dudit premier matériau.

4. Procédé selon l'une quelconque des revendications 1 à 3, **caractérisé en ce que** ledit premier ou second matériau comprend en outre un autre additif comprenant un polymère thermoplastique sur lequel est greffé des monomères d'anhydrides carboxyliques.

5. Procédé selon l'une quelconque des revendications 1 à 4, **caractérisé en ce que** ledit premier matériau et ledit second matériau sont des matériaux de nature différente, de préférence non susceptibles d'adhérer l'un à l'autre de manière satisfaisante lorsque soumis à des conditions de pression et de température typiques du moulage par injection.

6. Procédé selon l'une quelconque des revendications 1 à 5, **caractérisé en ce que** le second matériau comprend un élastomère.

7. Procédé selon l'une quelconque des revendications 1 à 6, caractérisé en ce lors de l'étape de positionnement, l'insert n'est pas à l'état fondu et/ou est à température ambiante.

8. Une pièce automobile composite comprenant un insert, comprenant un premier matériau plastique, et une couche d'un second matériau thermoplastique, **caractérisé en ce qu'**au moins l'un desdits premier et second matériaux comprend un additif, ledit additif comprenant un polymère sur lequel sont greffés des monomères d'anhydrides carboxyliques, lesdits premier et second matériaux étant respectivement à base de polyamide et à base de polypropylène, ou inversement ; et ledit second matériau comprenant du talc comme charge minérale ;
et caractérisé en ce ledit second matériau est fait d'un polymère comprenant un copolymère P/E à base de propylène polyéthylène comprenant 12% en masse de talc et 10% en masse d'un matériau élastomère de type EPR, de 0,2% à 0,5% en masse de SEBS et de 5% à 10% en masse de polypropylène greffé par des monomères d'anhydride maléique.

9. La pièce automobile selon la revendication 8, où ladite pièce est une pièce structurelle ou semi-structurelle, comme une poutre, par exemple une poutre de pare choc.

## Patentansprüche

1. Verfahren zum Herstellen eines Automobilverbundteils durch Umspritzen auf mindestens einer Oberfläche eines Formeinsatzes, welcher ein erstes Kunststoffmaterial umfasst, einer Schicht eines zweiten thermoplastischen Materials, wobei dieses Verfahren die folgenden aufeinanderfolgenden Schritte umfasst:
a) einen Schritt des Positionierens dieses Formeinsatzes in einer Form, und
b) einen Schritt des Spritzens dieses zweiten thermoplastischen Materials auf diesen Formeinsatz; wobei zumindest eines dieser ersten und zweiten Materialien ein Additiv umfasst, wobei dieses Additiv ein Polymer umfasst, auf welchem Carbonsäureanhydrid-Monomere aufgepfropft sind;
wobei diese ersten und zweiten Materialien jeweils Materialien auf Polyamidbasis und auf Polypropylenbasis oder umgekehrt sind; und
dieses zweite Material Talk als anorganischen Füllstoff umfasst; wobei dieses Verfahren **dadurch gekennzeichnet ist, dass** dieses zweite Material aus einem Polymer hergestellt wurde, welches ein Copolymer P/E auf Propylen-Polyethylenbasis umfasst, welches 12 Gew.-% Talk und 10 Gew.-% eines Elastomer-Materials des Typs EPR, zwischen 0,2 Gew.-% und 0,5 Gew.-% SEBS und zwischen 5 Gew.-% und 10 Gew.-% Polypropylen umfasst, auf welches Maleinsäureanhydrid-Monomere aufgepfropft werden.

2. Verfahren nach Anspruch 1, **dadurch gekennzeichnet, dass** dieser Schritt des Umspritzens ein Schritt des Spritzgießens ist.

3. Verfahren nach Anspruch 1 oder 2, **dadurch gekennzeichnet, dass** dieses erste Material ein Additiv umfasst und dass dieses Additiv Maleinsäureanhydrid und/oder eines seiner Derivate ist, gegebenenfalls in Mengenanteilen von 0,1 bis 20 Gew.-%, vorteilhafterweise von 2 bis 20 Gew.-% im Verhältnis zur Gesamtmasse des ersten Materials.

4. Verfahren nach einem der Ansprüche 1 bis 3, **dadurch gekennzeichnet, dass** das erste oder zweite Material außerdem ein anderes Additiv umfasst, welches ein thermoplastisches Polymer umfasst, auf welches Carbonsäureanhydrid-Monomere aufgepfropft sind.

5. Verfahren nach einem der Ansprüche 1 bis 4, **dadurch gekennzeichnet, dass** das erste Material und das zweite Material Materialien mit unterschiedlichen Eigenschaften sind, die vorzugsweise nicht dazu neigen, in zufriedenstellendem Maße aneinander zu haften, wenn sie Druck- und Temperaturbedingungen ausgesetzt werden, wie sie für das Spritzgießen typisch sind.

6. Verfahren nach einem der Ansprüche 1 bis 5, **dadurch gekennzeichnet, dass** das zweite Material ein Elastomer umfasst.

7. Verfahren nach einem der Ansprüche 1 bis 6, **dadurch gekennzeichnet, dass** sich der Formeinsatz während des Schritts des Positionierens nicht im geschmolzenen Zustand befindet und/oder Raumtemperatur aufweist.

8. Automobilverbundteil, welches einen Formeinsatz umfasst, welcher ein erstes Kunststoffmaterial, und eine Schicht eines zweiten thermoplastischen Materials umfasst, **dadurch gekennzeichnet, dass** mindestens eines dieser ersten und zweiten Materialien ein Additiv umfasst, wobei dieses Additiv ein Polymer umfasst, auf welches Carbonsäureanhydrid-Monomere aufgepfropft sind, wobei die ersten und zweiten Materialien jeweils auf Polyamidbasis und auf Polypropylenbasis oder umgekehrt hergestellt wurden; und dass das zweite Material Talk als mineralischen Füllstoff umfasst;
und **dadurch gekennzeichnet, dass** das zweite Material aus einem Polymer hergestellt wurde, welches ein Copolymer P/E auf Propylen-Polyethylenbasis umfasst, welches 12 Gew.-% Talk und 10 Gew.-% eines Elastomer-Materials des Typs EPR, zwischen 0,2 Gew.-% und 0,5 Gew.-% SEBS und zwischen 5 Gew.-% und 10 Gew.-% Polypropylen umfasst, auf welches Maleinsäureanhydrid-Monomere aufgepfropft wurden.

9. Automobilverbundteil nach Anspruch 8, wobei das Teil ein Fertigteil oder ein Halbfertigteil wie ein Träger, zum Beispiel ein Stoßstangenträger, ist.

## Claims

1. Process for manufacturing a composite automobile part by overmoulding, over at least one surface of an insert comprising a first plastic material, a layer of a second thermoplastic material, said process comprising the following successive steps:
a) a step of positioning said insert in a mould, and
b) a step of moulding said second thermoplastic material over said insert;
at least one of said first and second materials comprising an additive, said additive comprising a polymer to which carboxylic anhydride monomers are grafted;
said first and second materials being respectively based on polyamide and based on polypropylene, or vice versa; and
said second material comprising talc as mineral filler; said process being **characterised in that** said second material is made of a polymer comprising a P/E copolymer based on propylene and polyethylene comprising 12 % by weight of talc and 10 % by weight of an EPR type elastomer material, from 0.2 % to 0.5 % by weight of SEBS and from 5 % to 10 % by weight of polypropylene grafted with maleic anhydride monomers.

2. Process according to claim 1, **characterised in that** said moulding step is an injection moulding step.

3. Process according to claim 1 or 2, **characterised in that** said additive is maleic anhydride and/or one of its derivatives, possibly in proportions ranging from 0.1 % to 20 %, advantageously from 2 % to 20 % by weight compared with the total weight of said first and/or said second material.

4. Process according to any one of claims 1 to 3, **characterised in that** said first or second material further comprises another additive comprising a thermoplastic polymer to which carboxylic anhydride monomers are grafted.

5. Process according to any one of claims 1 to 4, **characterised in that** said first material and said second material are materials of different type, preferably not likely to adhere to each other satisfactorily when subjected to typical injection moulding pressure and temperature conditions.

6. Process according to any one of claims 1 to 5, **characterised in that** the second material comprises a propylene/ethylene copolymer and/or an elastomer.

7. Process according to any one of claims 1 to 6, **characterised in that** during the positioning step, the insert is not in molten state and/or is at ambient temperature.

8. A composite automobile part comprising an insert comprising a first plastic material and a layer of a second thermoplastic material, **characterised in that** at least one of said first and second materials comprises an additive, said additive comprising a polymer to which carboxylic anhydride monomers are grafted, said first and second materials being respectively based on polyamide and based on polypropylene, or vice versa; and said second material comprising talc as mineral filler;
and **characterised in that** said second material is made of a polymer comprising a P/E copolymer based on propylene and polyethylene comprising 12 % by weight of talc and 10 % by weight of an EPR type elastomer material, from 0.2 % to 0.5 % by weight of SEBS and from 5 % to 10 % by weight of polypropylene grafted with maleic anhydride monomers.

9. The automobile part according to Claim 8, wherein said part is a structural or semi-structural part, such as a beam, for example a bumper beam.
